# EUROPEAN PATENT APPLICATION

(11) **EP 2 538 696 A1**
(43) Date of publication of application: **26.12.2012**
(21) Application number: 12162249.2
(22) Date of filing: 29.03.2012
(51) Int. Cl.: H04N 21/81, H04N 21/482

(54) **Method and apparatus for multimedia content playback**

(30) Priority: 20.06.2011 KR 20110059433
(71) Applicant: Samsung Electronics Co., Ltd., Suwon-si, Gyeonggi-do, 443-742 (KR)
(72) Inventor: Lee, Eun Hye, Gyeonggi-do (KR); Seong, Jin Ha, Gyeonggi-do (KR); Chae, Eun Sun, Gyeonggi-do (KR); Kim, Min Kyung, Gyeonggi-do (KR); Yuk, Seung Ju, Gyeonggi-do (KR)
(74) Representative: Jenkins, Richard Gavin

(57) **Abstract**

A method and apparatus for multimedia content playback are disclosed. Upon detecting user entry of a content selection command, the apparatus randomly selects a number of multimedia content items from an entire list of stored multimedia content. A playlist is created containing the selected multimedia content items as entries, and the playlist is displayed. At least one multimedia content item on the playlist is played back upon reception of a playback command for the playlist.

## Description

### BACKGROUND

### Technical Field

This disclosure relates to a method and apparatus for playing back and organizing multimedia content such as music files, which is particularly useful in electronic devices storing a large number of multimedia files.

### Description of the Related Art

In recent years, mobile terminals have evolved into multimedia devices providing various supplementary functions related to, for example, electronic organizers, games and schedule managers. To support various supplementary functions or services, it is desirable for mobile terminals to provide a convenient and easy-to-use user interface.

Incidentally, multimedia content players (such as mobile terminals, personal computers, MP3 players and PMPs) equipped with mass storage devices like flash memories and hard disks may store a large amount of multimedia content. Multimedia content may refer to digital items or works such as written works, musical works, photographs, art works and moving images, and may indicate usable objects stored in storage media.

For mobile devices in particular, since a large number of multimedia content items may be stored in the mobile device, it may be difficult for some users to select desired multimedia content items for playback.

Thus there is a need to facilitate multimedia content playback, and to enhance the user experience for mobile multimedia content players, as well as for desktop devices.

### SUMMARY

Disclosed is a multimedia content playback method and apparatus wherein a relatively small number of multimedia content items can be randomly selected from a large amount of multimedia content and presented to the user as a playlist for playback. An undesired item of the playlist may be replaced with another multimedia content item that can be randomly selected by the playback apparatus.

In accordance with an exemplary embodiment of the present invention, a method for multimedia content playback is implemented in a playback apparatus. Upon detecting user entry of a content selection command, the apparatus randomly selects a number of multimedia content items from an entire list of stored multimedia content. A playlist is created containing the selected multimedia content items as entries, and the playlist is displayed. At least one multimedia content item on the playlist is played back upon reception of a playback command for the playlist.

### BRIEF DESCRIPTION OF THE DRAWINGS

Features and advantages of the present invention will be more apparent from the following detailed description in conjunction with the accompanying drawings, in which:
FIG. 1 is a block diagram of an apparatus for multimedia content playback according to an embodiment of the present invention;
FIG. 2 is a flowchart of a method for multimedia content playback that may be practiced by the apparatus of FIG. 1;
FIG. 3 is a detailed flowchart of a playlist editing step in the method of FIG. 2;
FIGS. 4A and 4B illustrate a first example of a method for multimedia content playback;
FIGS. 5A and 5B illustrate a second example of a method for multimedia content playback; and
FIGS. 6A to 6C illustrate a third example of a procedure for multimedia content playback.

### DETAILED DESCRIPTION

Hereinafter, exemplary embodiments of the present invention are described in detail with reference to the accompanying drawings. The same reference symbols are used throughout the drawings to refer to the same or like parts. Detailed descriptions of well-known functions and structures incorporated herein may be omitted to avoid obscuring the subject matter of the present invention.

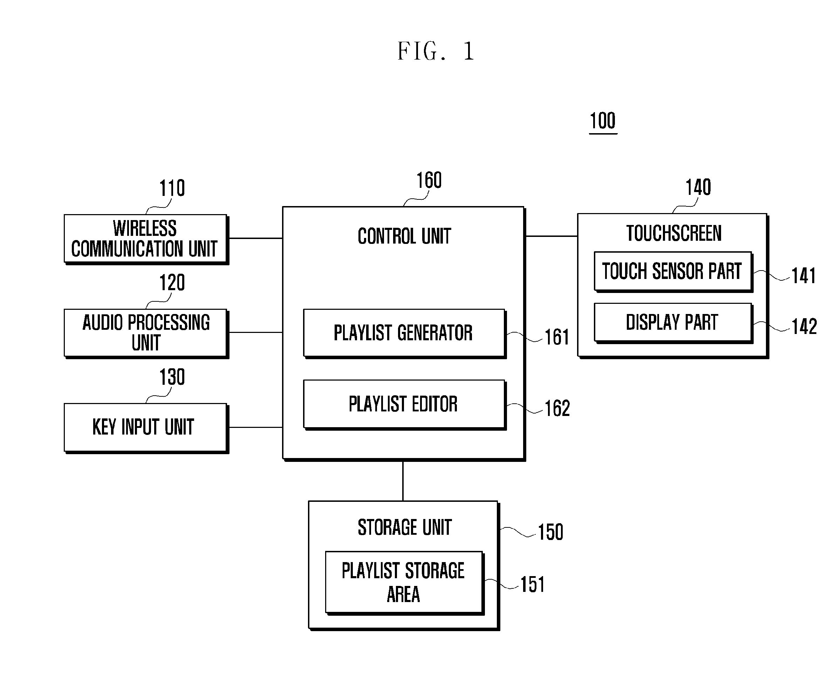

FIG. 1 is a block diagram of a multimedia content playback apparatus 100 according to an embodiment of the present invention. As shown in FIG. 1, the multimedia content playback apparatus 100 may include a wireless communication unit 110, an audio processing unit 120, a key input unit 130, a touchscreen 140, a storage unit 150, and a control unit 160. Apparatus 100 can be a portable electronic device such as a smart phone, music player, tablet PC, laptop, netbook, and so forth.

The control unit 160 comprises one or more processors and controls overall operations of individual components of the multimedia content playback apparatus 100. In particular, the control unit 160 may control a process of randomly selecting a number of multimedia content items from among a large or massive amount of multimedia content to present the same to the user as a playlist for playback, and replacing an undesired entry of the playlist with another multimedia content item. To achieve this, the control unit 160 may include a playlist generator 161 and a playlist editor 162.

The playlist generator 161 detects reception of a content selection command for selecting multimedia content items to be randomly played back. Such a content selection command may be received at any time before or after initiation of multimedia content playback. In other words, to initiate randomized content playback, the user may enter a content selection command from the beginning or during playback of selected multimedia content.

Upon reception of a content selection command, the playlist generator 161 randomly selects a number of multimedia content items from among all multimedia content items stored in the storage unit 150 to create a playlist. Upon reception of a playlist storage command from the user, the playlist generator 161 may store the currently used playlist as a user playlist.

The playlist editor 162 may edit a playlist of randomly selected multimedia content items to change one or more entries of the playlist. More specifically, the playlist editor 162 receives a playlist edit command from the user. In one embodiment, the playlist edit command may be an edit-select command for selecting one or more entries of the playlist. The edit-select command may correspond to a touch input in a device having a touchscreen capability, and may correspond to a select key input in a device having a regular keypad.

Upon reception of a playlist edit command from the user, the playlist editor 162 removes the selected entries from the playlist, randomly selects the same number of multimedia content items as the number of entries removed from the playlist, adds the randomly selected multimedia content items to the playlist as new entries, and displays the changed playlist. The playlist editor 162 may repeat this editing procedure.

In the above description, the playlist generator 161 and the playlist editor 162 are depicted as separate blocks having different functions, and as sub-units within control unit 160. However, in practice, playlist generator 161 and playlist editor 162 may be parts of a common software module that is executed by a processor of control unit 160Further, the control unit 160 may directly perform functions of the playlist generator 161 and playlist editor 162 in whole or part.

The wireless communication unit 110 is a module that is present only when the multimedia content playback apparatus 100 supports wireless communication. That is, the multimedia content playback apparatus 100 may or may not include the wireless communication unit 110 depending upon supportability of wireless communication. The wireless communication unit 110 performs data transmission and reception through wireless communication. The wireless communication unit 110 may include a radio frequency (RF) transmitter for upconverting the frequency of a signal to be transmitted and amplifying the signal, and an RF receiver for low-noise amplifying a received signal and downconverting the frequency of the received signal. The wireless communication unit 110 may forward data received through a wireless channel to the control unit 160, and transmit data from the control unit 160 through the wireless channel.

The audio processing unit 120 may include a coder/decoder (codec). The codec may have a data codec for processing packet data and the like, and an audio codec for processing an audio signal such as a voice signal. The audio processing unit 120 converts a digital audio signal into an analog audio signal through the audio codec to reproduce the analog audio signal using a speaker, and converts an analog audio signal from a microphone into a digital audio signal through the audio codec.

The key input unit 130 generates an input signal corresponding to key manipulation of the user wishing to control the multimedia content playback apparatus 100 and sends the input signal to the control unit 160. The key input unit 130 may include a keypad including numeric and direction keys, and function keys attached to sides of the multimedia content playback apparatus 100. In particular, the key input unit 130 may generate a command for randomly select multimedia content items to form a playlist, and a command for editing the playlist to change an entry of the playlist.

When the multimedia content playback apparatus 100 can be operated using only the touchscreen 140, the key input unit 130 may be excluded as the touchscreen 140 functions as an input means.

The touchscreen 140 includes a touch sensor part 141 and a display part 142. The touch sensor part 141 detects a touch input of the user. The touch sensor part 141 may be realized using a capacitive, resistive, infrared or pressure sensor. In the present invention, any sensor capable of detecting contact or pressure may be utilized to form the touch sensor part 141. The touch sensor part 141 generates a touch signal corresponding to user touch and sends the touch signal to the control unit 160. The touch signal carries coordinate data of the touch point. When the user makes a touch-point move gesture, the touch sensor part 141 generates a touch signal carrying coordinate data describing the path of the touch-point move and forwards the generated touch signal to the control unit 160.

In particular, the touch sensor part 141 may generate a content selection command for randomly select multimedia content items to form a playlist, and an edit command for editing the playlist to change an entry of the playlist.

The display part 142 may be realized using liquid crystal display (LCD) devices, organic light emitting diodes (OLED), or active matrix organic light emitting diodes (AMOLED). The display part 142 provides various information such as menus, input data and function-setting data to the user in visual form. The display part 142 may output a boot screen, an idle screen, a menu screen, a call handling screen and other application screens.

Although the multimedia content playback apparatus 100 is depicted as having a touchscreen capability, the present invention may be applied to a content playback apparatus with or without a touchscreen capability. When the present invention is applied to a content playback apparatus without a touchscreen capability, the function of the touchscreen 140 may be limited to that of the display part 142.

The storage unit 150 stores programs and data needed for operation of the multimedia content playback apparatus 100, and may include a program area and a data area. The program area stores an operating system that boots the multimedia content playback apparatus 100 and controls the overall operation thereof, application programs for playing back multimedia content, other application programs related to a camera, sound reproduction, and playback of still or moving images. The data area is an area that stores data generated in the course of using the multimedia content playback apparatus 100, and may store multimedia content such as images, moving images, phonebooks and audio data.

In particular, the storage unit 150 may include a playlist storage area 151, which stores a currently used playlist and related data.

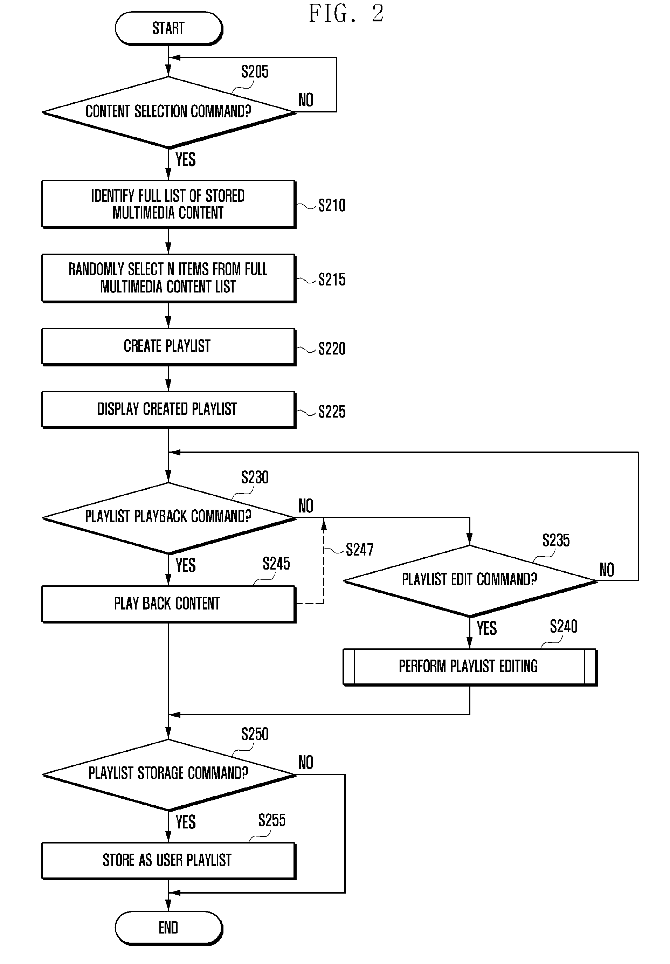

FIG. 2 is a flowchart of a method for multimedia content playback in accordance with the invention, that may be implemented in multimedia content playback apparatus 100 of FIG. 1. At the outset of the method, control unit 160 checks whether a content selection command for selecting multimedia content items to be randomly played back is received (S205). As described earlier, a content selection command may be received at any time before or after initiation of multimedia content playback.

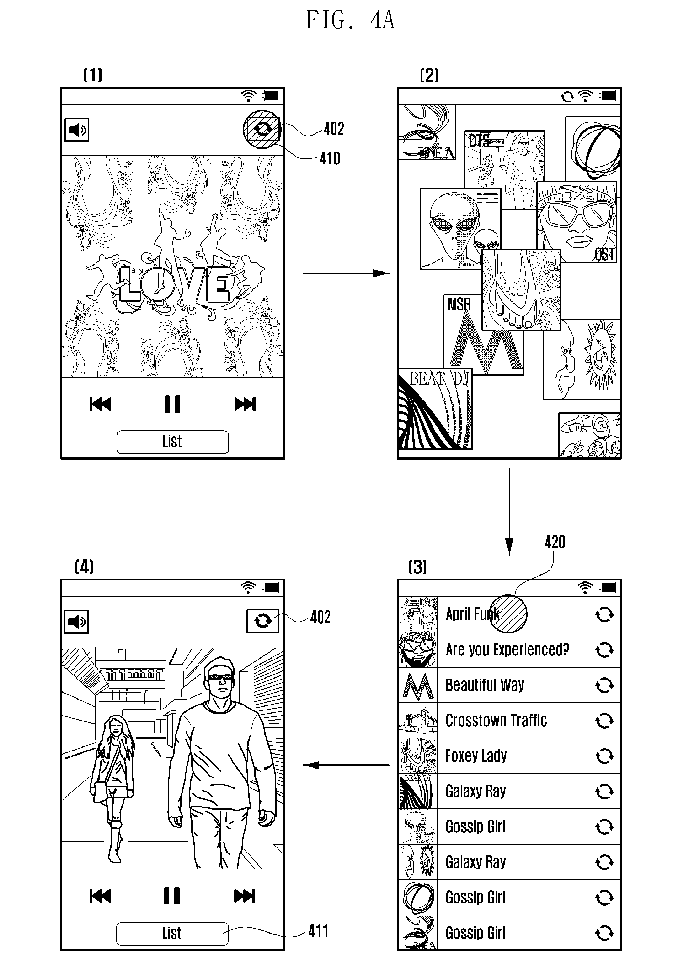

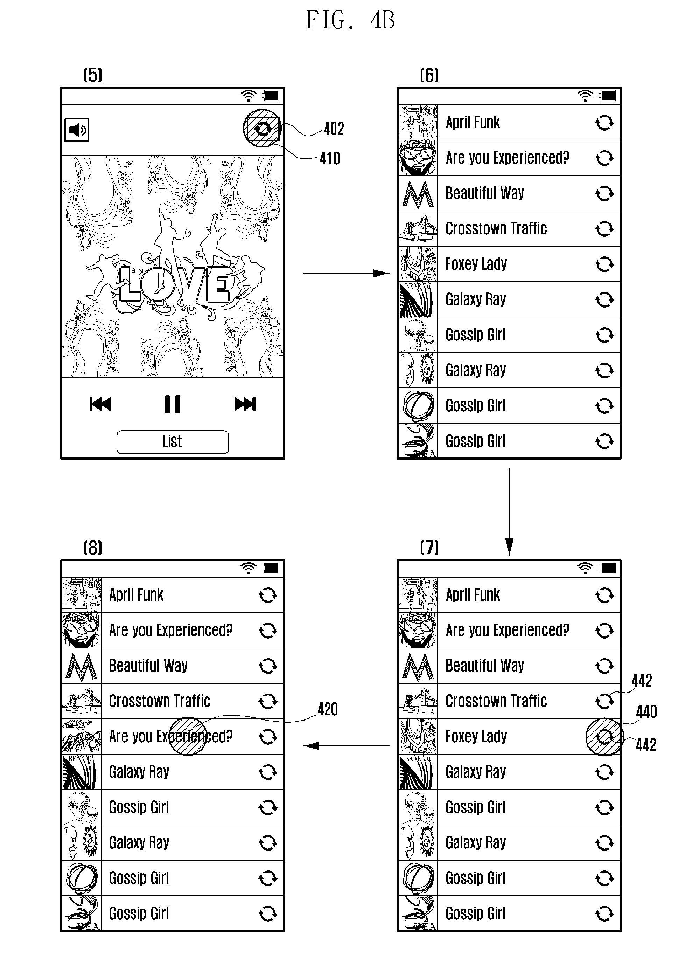

In response to receipt of the content selection command, the control unit 160 identifies a complete list of multimedia content stored apparatus 100 (S210). The control unit 160 thereafter randomly selects N multimedia content items from the complete multimedia content list (S215), which typically contains a number of selections that is an order of magnitude higher than the number N. Note that the value of N may be set in advance or dynamically adjusted according to screen size, and may also be set by the user in a settings menu, prompt, or the like. Preferably, N is at least two. As an example, N can be set to a value on the order of ten, such that all of the N selections are readily visible to a user, as shown in the example screens of FIGS. 4 - 6.

The control unit 160 then creates a playlist containing the randomly selected N multimedia content items (S220), and displays the created playlist (S225).

Once the playlist is created and displayed, control unit 160 checks whether a playlist playback command is received (S230) via user touch screen input or the like. When a playlist playback command is received, the control unit 160 plays back entries of the playlist in either a random order (S245), or in an order according to a displayed list of the N selections.

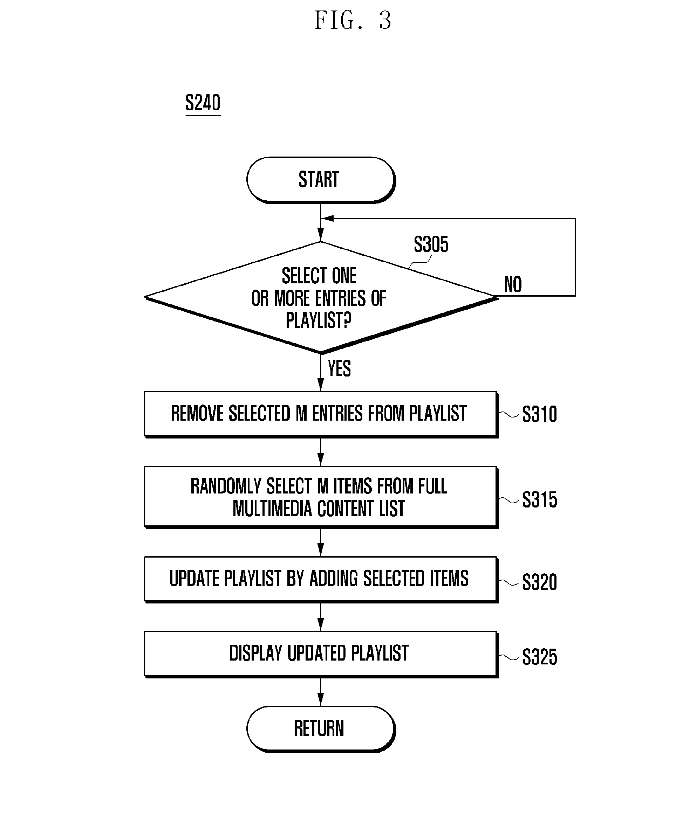

When a playlist playback command is not received, the control unit 160 checks whether a playlist edit command is received (S235). When a playlist edit command is received, the control unit 160 performs playlist editing (S240). Step S240 for playlist editing is described in detail later with reference to FIG. 3.

While content is being played back at S245, if the user decides to edit the playlist, the flow proceeds to S235 (as indicated by path 247). In this manner, content playback a particular content need not be interrupted while the user edits other selections of the playlist.

While content is played back at S245, or after all content of the playlist has been played back, the control unit 160 checks whether a playlist storage command is received (S250). When a playlist storage command is received, the control unit 160 stores the currently used playlist as a user playlist (S255).

FIG. 3 is a detailed flowchart of an exemplary step S240 for playlist editing in the method of FIG. 2. At S305, control unit 160 checks whether an edit-select command for selecting one or more entries of the playlist is received. In the playlist editing operation, the edit-select command may be a command for selecting M entries out of the N playlist entries, where M is less than or equal to N. When an edit-select command is received, control unit 160 removes the selected M entries from the playlist (S310), randomly selects M multimedia content items from the full multimedia content list stored in the apparatus (S315), and updates the playlist by adding the randomly selected M multimedia content items as new entries (S320). The updated playlist is then displayed (S325).

In an embodiment variation, a user is given the option of replacing one of more of the M removed entries at S310. For instance, a prompt may be displayed during the removal process, prompting the user to replace the removed entry or entries randomly or via manual user selection. If the user selects the manual option, succeeding prompts can be displayed to facilitate the replacement process, such as a search field in which the user can type the name of a song or an artist, etc.

As described above, the multimedia content playback apparatus 100 provides a method that may randomly select a number of multimedia content items from a large amount of stored multimedia content, present the same to the user as a playlist, and edit the playlist according to user selection.

Next, multimedia content playback is described using specific screen examples illustrated in FIGS. 4 to 6.

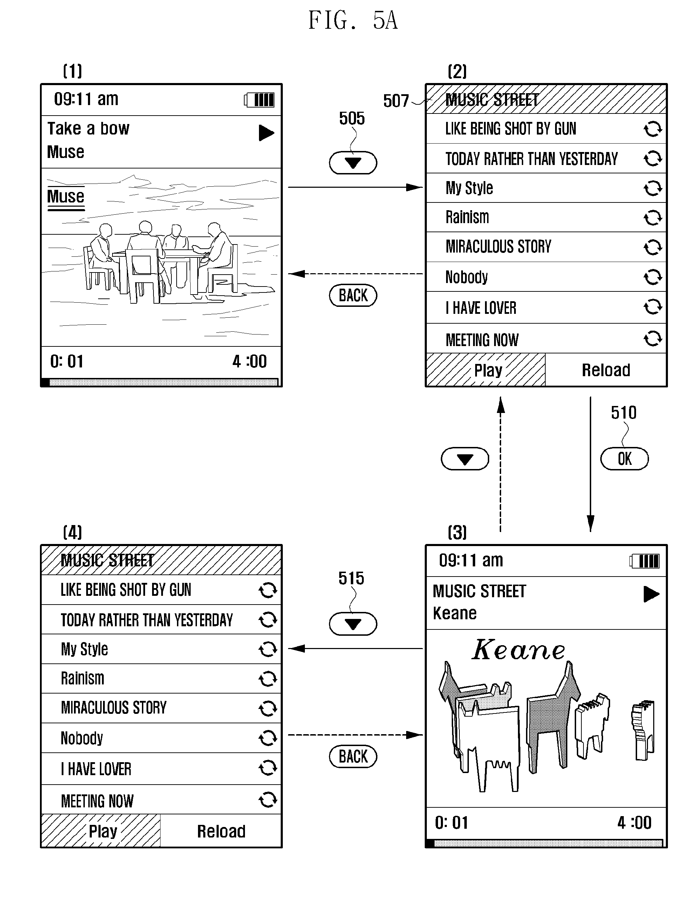

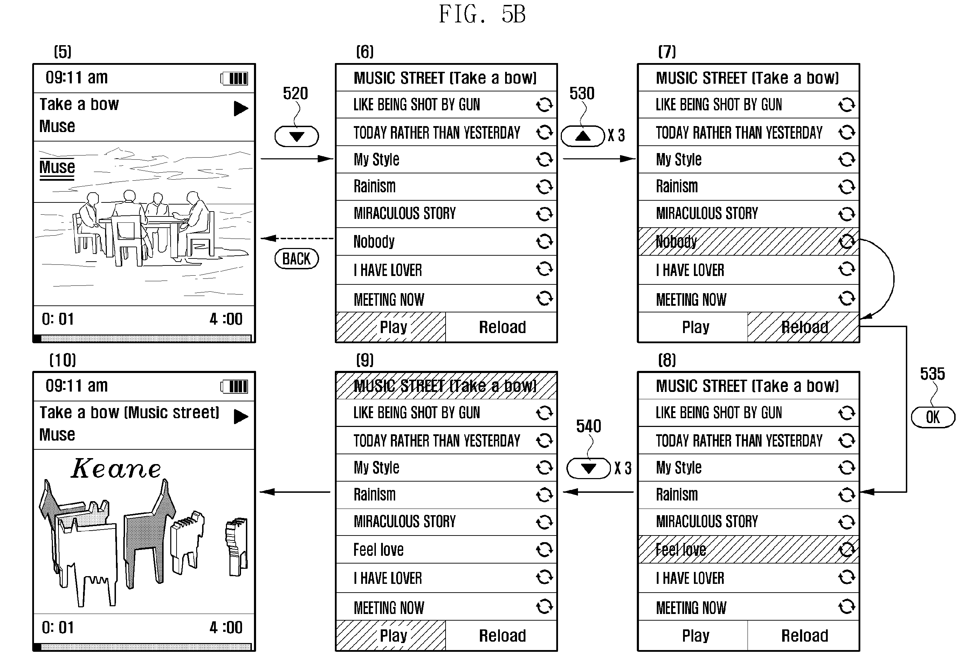

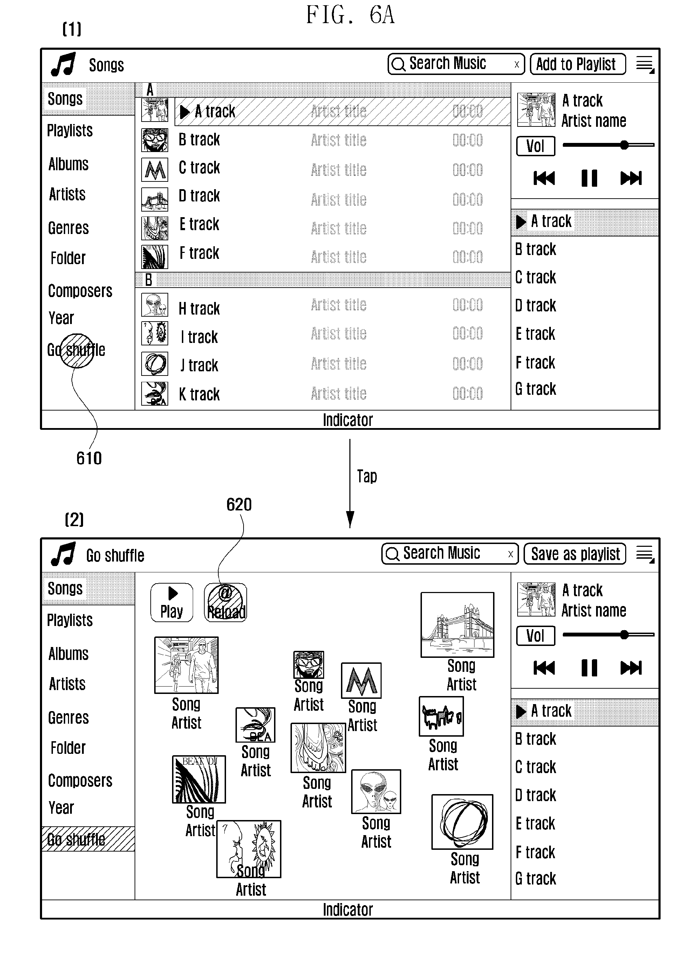

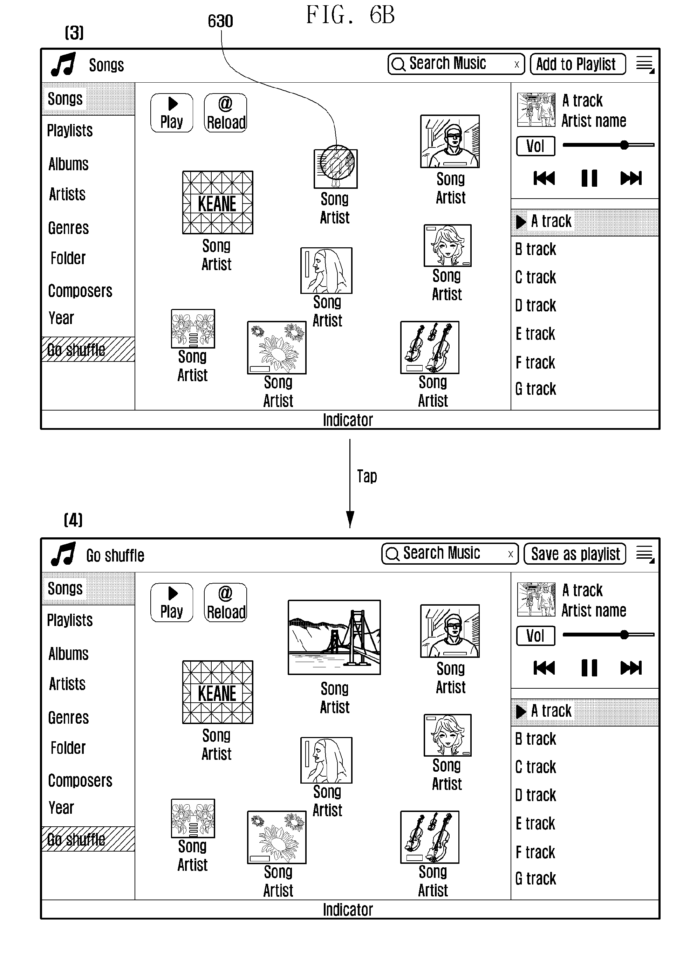

A first example in FIG. 4A, 4B illustrates interactions for multimedia content playback in a small mobile device such as a smart phone having touchscreen capability. A second example in FIG. 5A, 5B illustrates interactions for multimedia content playback in a mobile device having a keypad. A third example in FIG. 6A, 6B illustrates interactions for multimedia content playback in a mobile device such as a tablet PC or laptop, having a large touchscreen.

### <First Example>

FIGS. 4A and 4B depict interactions for multimedia content playback according to the first example, in which multimedia content playback apparatus 100 is a relatively small mobile device such as a smart phone having touchscreen capability. As shown in FIG. 4A, in screen (1), the multimedia content playback apparatus 100 is in a playback mode or "playlist setting mode" before, during or following play back of multimedia content. An icon 402 is displayed on the screen for the specific purpose of creating a random playlist (or for editing a playlist that is currently being played, which is discussed below). When The user can enter a "content selection command" by making a touch gesture 410 on icon 402.

In response to detecting the content selection command, the multimedia content playback apparatus 100 randomly selects N multimedia content items from the entire multimedia content list to create a playlist. The playlist may be displayed as in example playlist screens (2) or (3), where the type of playlist screen (e.g., type (2) or (3)) can be established either by default in the apparatus 100 or via user selection in a settings menu. In screen (2), entries of the playlist are represented as visual representations such as album jackets at random or predetermined locations. In screen (3), entries of the playlist are displayed in a form of a list. With either type of screen (2) or (3), in the case of music content, it is preferred that the names or other indications of particular songs are displayed, in association with the artist or specific album. This allows for easy identification of the specific content that is randomly selected by apparatus 100.

Once the playlist is thus randomly generated and displayed, to play back a specific multimedia content item from the playlist, the user enters a playback command by making a touch gesture 420 on a desired entry of the playlist as in screen (3). (A similar entry would be made in screen (2) by a touch gesture on an album jacket.) The multimedia content associated with the touched entry is then played back as shown in example screen (4).

In an embodiment variation, while the list of screen (2) or (3) is first displayed, if apparatus 100 does not detect a playback command within a predetermined period of time, apparatus 100 may automatically begin an ordered or random playback of the entries in the list. During such playback, the user can enter a specific playback command in the same manner as just described, interrupting the current random playback in favor of the selection.

During playback as exemplified by screen (4), the user may cause the screen to revert back to screen (2) or (3) by touch entry on a "list" icon 411; this action can cause immediate interruption of playback in some implementations. In other implementations, touch entry on the list icon 411 will cause the display to change to screen (2) or (3) but the current playback of the prior selection will continue until the user selects another entry.

Once the playback of the selected entry is complete, the screen may automatically revert back to the previous screen (2) or (3). Alternatively, apparatus 100 may automatically play another entry in the playlist, until interrupted by a user command.

FIG. 4B depicts interactions for creating and editing a playlist. Screens (5) and (6) are the same as screens (1) and (3), respectively, of FIG. 4A. Thus, screen (5) represents a state before, during or after multimedia content is played back. In this state, the user selects icon 402 with touch gesture 410 to initiate creation of a random playback list. The screen then changes to screen (6) where a the random playlist of N items is displayed.

To edit the playlist, the user enters an edit command by making a touch gesture 440 on an entry of the playlist as in screen (7). Logically, the touch gesture 440 designated for editing is designed to be different than the touch gesture 420 of FIG. 4A designated for playback. For instance, touch gesture 440 may be made over a "reload" icon 442 of a particular row (field) to select the corresponding content in that field for editing. On the other hand, to play the content in a given field, a touch gesture may be made in another area of the field, as depicted by touch gesture 420 of FIG. 4A. Check boxes can also be used in each row, followed by a separate command in another field to edit or play. In an alternative implementation, the duration by which touch contact is made can be used to distinguish between the edit and play commands. A "tap" may be used for a play command while a "touch and hold" is used to initiate editing.

Once an edit command is detected via detecting touch gesture 440, playback apparatus 100 removes the touched entry from the playlist, randomly selects a multimedia content item from the full multimedia content list, updates the playlist by adding the randomly selected multimedia content item as a new entry. The updated playlist is then displayed, as illustrated in example screen (8). Here, when the user selects M entries of the playlist, M multimedia content items are randomly selected to update the playlist. The random selection and updating may be performed for one item at a time, or as a group. (In the latter case, another user command is used to randomize a group M of editing selections after the M items are selected.)

It is noted, as mentioned above, that instead of a randomized replacement for the edited content item, a user-selected replacement can be made via suitable command. For example, a special icon can be set up, or a special prompt, to enable the user to select the replacement.

A similar procedure is used to edit a playlist depicted in the randomized display format as shown in screen (2) of FIG. 4A. That is, a content corresponding to a displayed album jacket can be designated for editing (removal and replacement with a randomized or user-selected replacement) in any suitable number of ways. For example, a single touch contact can highlight the item, and a different command used in another portion of the screen to select for editing.

When the updated playlist is satisfactory, the user enters a playback command to play back multimedia content on the playlist, as illustrated with touch gesture 420' of screen (8). Furthermore, the user can store the particular playlist in apparatus 100 pre-configured to respond to suitable commands for such storage.

### <Second Example>

The second example, shown in FIGs. 5A and 5B, illustrates interactions for multimedia content playback when the multimedia content playback apparatus 100 is a mobile device having a keypad.

Referring to FIG. 5A, as in screen (1), the multimedia content playback apparatus 100 is playing back multimedia content (or is in a state prior to, or following, playback of content). In this state, to select multimedia content items to be randomly played back, the user enters a content selection command by depressing a key 505. In the example shown, the key 505 is a direction key; however, detection of other predetermined keys in this state could be alternatively be implemented to carry out this function.

In response to detecting the content selection command, the multimedia content playback apparatus 100 randomly selects N multimedia content items from the full multimedia content list to create a playlist. As shown in screen (2), the playlist may be displayed in a form of a list. As described earlier, the playlist may be displayed in other forms. The type of display can be selected in a settings menu or the like. With either type of display, for the case of music content, it is preferable that the name of the song is displayed along with the artist and particular album, to help the user identify the content.

To play back a particular multimedia content item of the playlist, the user scrolls to a desired item using the direction key 505; this operation places a cursor on, or highlights, the row containing one item at a time, as indicated at 507. With a desired item highlighted, the user enters an "OK" key 510 to select that item for a particular operation. The user then enters a playback command by moving the cursor to a "play" field on the screen and again entering the "OK" key 510. Then, the multimedia content playback apparatus 100 initiates multimedia content playback as in screen (3). Note that instead of the user selecting a particular item for playback, the user can initially just scroll to the play field and enter the OK key 510, whereby random playback will be initiated. In either case, during playback, an album jacket or other indicia of the content item being played back may be displayed as in screen (3).

During content playback, the user may switch the screen back to to the playlist screen listing the entries and thereby identify the playlist by entering a direction key 515 or other predetermined key as in screen (4).

FIG. 5B depicts interactions for creating and editing a playlist. Referring to example screen (5), the multimedia content playback apparatus 100 is playing back multimedia content (or is in a state prior to or following playback). In this state, to select multimedia content items to be randomly played back, the user enters a content selection command by entering a key 520.

Then, the multimedia content playback apparatus 100 randomly selects N multimedia content items from the full multimedia content list to create a playlist and displays the created playlist in a form of a list as in screen (6). Screen (6) is the same as screen (2) of FIG. 5A.

To edit the playlist, the user may enter an edit command by entering a direction key 530 so as to place the cursor on an entry of the playlist to be replaced. In the screen (6) example, the cursor is positioned in the "play" field because the user had previously been playing content in screen (5) prior to the user entering a content selection command to create the randomized playlist. To edit the playlist, as shown in the example of screen (7), an "up arrow" key 530 is entered three times to place the cursor on an entry named "Nobody", which is to be replaced with a different content item.

At this point, when the user enters "OK" key 535, the Nobody item is selected for a further operation. To remove Nobody from the list, the user scrolls the cursor down to the bottom row, and enters a "right" key (not shown) to place the cursor on a Reload field.

Upon entering "Reload", multimedia content playback apparatus 100 removes the selected entry from the playlist, updates the playlist by adding a randomly selected multimedia content item as a new entry, and displays the updated playlist as in screen (8). In the playlist of screen (8), the entry named "Nobody" is replaced with a new entry named "Feel Love".

To play back the updated playlist, the user may enter a playback command by moving the cursor to the "Play" field and enter the OK key 535 or a dedicated play key, if one is provided. In screen (8), to move the cursor from the entry named "Feel Love" to the "play" field, a "down arrow" key 540 is entered three times. Then, the cursor is placed on the "play" button as in screen (9). When the "play" button is entered, one of the entries in the playlist is played back as in screen 10, which may automatically done in order beginning from the top of the list. Alternatively, to play back a particular content item, the user selects the item via the direction keys 530, 540, hits the OK key 535 on a highlighted entry and thereafter returns the cursor to the Play field to command playback of the highlighted entry.

### <Third Example>

The third example illustrates interactions for multimedia content playback when the multimedia content playback apparatus 100 is a mobile device having a large touchscreen.

FIGS. 6A to 6C depict interactions for multimedia content playback according to the third example. As shown in FIG. 6A, before multimedia content playback, the multimedia content playback apparatus 100 displays an interface screen as in screen (1). Later, to select multimedia content items to be randomly played back, the user enters a content selection command by making a touch gesture 610 on a "Go Shuffle" icon.

Then, the multimedia content playback apparatus 100 randomly selects N multimedia content items from the full multimedia content list to create a playlist. As illustrated in screen (2), entries of the thus created playlist may be represented as album jackets, along with the name of the artist and the song(s) displayed in proximity to each album jacket.

To fully replace an entire playlist, the user may enter a playlist edit command by making a touch gesture on an icon 620 for playlist reload, as depicted in screen (2).

Then, the multimedia content playback apparatus 100 randomly reselects N multimedia content items from the full multimedia content list to create a playlist as shown in example screen (3) of FIG. 6B. (Note that none of the entries of screen (3) were part of the playlist of screen (2).

To edit the playlist, the user enters an edit command by making a touch gesture 630 on an entry of the playlist in screen (3). That is, the user touches an entry to be changed. Then, the multimedia content playback apparatus 100 removes the touched entry from the playlist, randomly selects a multimedia content item from the full multimedia content list, updates the playlist by adding the randomly selected multimedia content item as a new entry, and displays the updated playlist as in screen (4) of FIG. 6B. It is noted that in some implementations, the playlist is automatically updated in this manner as soon as the user touches one of the entries. In other implementations, a two step process is used wherein the user first touches the entry to highlight it, and thereafter, the user touches the "@Reload" icon to replace the entry. Further, the user may be presented with the option of replacing a particular entry with a user selected entry instead of a randomly selected entry, as mentioned earlier.

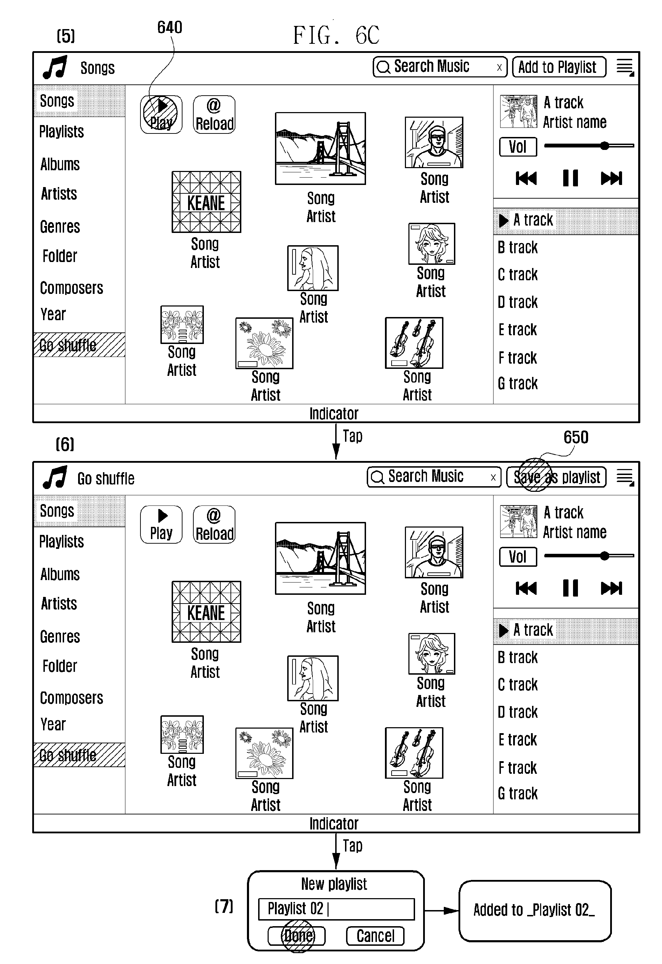

When the updated playlist is satisfactory, as illustrated in example screen (5) of FIG. 6C, the user enters a playback command 640 to play back multimedia content in the playlist.

To store the current playlist being played back as a user playlist, the user makes a touch gesture 650 on a "save" icon as shown in example screen (6) of FIG. 6C. Then, the current playlist being played back is stored as a user playlist as illustrated in sub-screen (7) of FIG. 6C.

In a feature of the present invention, a number of multimedia content items are randomly selected from a large or massive amount of multimedia content and presented to the user as a playlist for playback. Hence, the user may readily obtain a randomized or "apparatus recommended" playlist of multimedia content (i.e., a playlist essentially recommended by the apparatus) through a simple user interface feature. In addition, the user may edit the playlist of randomly selected multimedia content items to delete an undesired item of the playlist or replace the same with another multimedia content item. Hence, the user may easily optimize the playlist.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be understood that many variations and modifications of the basic inventive concept described herein will still fall within the spirit and scope of the present invention as defined in the appended claims.

## Claims

1. A method for multimedia content playback, implemented in a playback apparatus, the method comprising:
randomly selecting, upon detecting user entry of a content selection command, a number of multimedia content items from an entire list of stored multimedia content;
creating a playlist containing the selected multimedia content items as entries and displaying the created playlist; and
playing back, upon reception of a playback command for the playlist, at least one multimedia content item on the playlist.

2. The method of claim 1, further comprising editing the playlist, upon reception of an edit command for the playlist after playlist display, by replacing at least one multimedia content item of the playlist with at least one another multimedia content item of the entire list.

3. The method of claim 2, wherein editing the playlist comprises:
receiving a select command for selecting at least one entry of the playlist;
removing the at least one selected entry from the playlist;
randomly selecting the same number of multimedia content items from the full multimedia content list as the number of entries removed from the playlist, and updating the playlist by adding the randomly selected multimedia content items as new entries; and
displaying the updated playlist.

4. The method of claim 1, further comprising storing the playlist being currently played back as a user playlist.

5. The method of claim 1, wherein the content selection command is received before or after multimedia content playback.

6. The method of claim 1, wherein displaying the created playlist comprises displaying album jackets associated with entries of the playlist at predetermined locations on a display screen.

7. The method of claim 2, wherein the edit command is applied to all or some entries of the playlist.

8. An apparatus for multimedia content playback, comprising:
an input unit configured to receive a user command;
a display unit configured to display a playlist of multimedia content items and display an edit screen;
a storage unit configured to store a plurality of multimedia content items; and
a control unit configured to control a process of randomly selecting, upon reception of a content selection command, a number of multimedia content items from an entire list of stored multimedia content, creating a playlist containing the selected multimedia content items as entries, displaying the created playlist, and playing back, upon reception of a playback command for the playlist, at least one multimedia content item on the playlist.

9. The apparatus of claim 8, wherein the control unit controls, upon reception of an edit command for the playlist, an operation to replace at least one multimedia content item of the playlist with at least one other multimedia content item of the entire list.

10. The apparatus of claim 9, wherein the control unit controls, upon reception of the edit command for the playlist, a process of selecting at least one entry of the playlist, removing the at least one selected entry from the playlist, randomly selecting the same number of multimedia content items from the full multimedia content list as the number of entries removed from the playlist, and updating the playlist by adding the randomly selected multimedia content items as new entries.

11. The apparatus of claim 8, wherein the control unit controls, upon reception of a storage command, an operation to store the playlist being currently played back as a user playlist.

12. The apparatus of claim 8, wherein the content selection command is received before or after multimedia content playback.

13. The apparatus of claim 8, wherein the control unit displays album jackets associated with entries of the playlist at some positions on the display unit or displays entries of the playlist in a form of a list on the display unit.

14. The apparatus of claim 9, wherein the edit command is applied to all or some entries of the playlist.
